# EUROPÄISCHE PATENTSCHRIFT

(11) **EP 2 095 149 B1**
(45) Veröffentlichungstag und Bekanntmachung des Hinweises auf die Patenterteilung: **21.12.2016**
(21) Anmeldenummer: 07822805.3
(22) Anmeldetag: 22.11.2007
(51) Int. Cl.: G01S 19/07, G01S 19/13, G01S 19/36

(54) **SATELLITENNAVIGATIONSEMPFÄNGER**
SATELLITE NAVIGATION RECEIVER
RÉCEPTEUR POUR LA NAVIGATION PAR SATELLITE

(30) Priorität: 23.11.2006 DE 102006055383
(43) Veröffentlichungstag der Anmeldung: 02.09.2009
(73) Patentinhaber: Fraunhofer-Gesellschaft zur Förderung der angewandten Forschung e.V., 80686 München (DE)
(72) Erfinder: URQUIJO, Santiago, 91056 Erlangen (DE); BENDER, André, 91031 Forchheim (DE); FIERMANN, Christian, 90556 Cadolzburg (DE); KIRCHNER, Michael, 90491 Nürnberg (DE); ROHMER, Günter, 91058 Erlangen (DE)
(74) Vertreter: Zimmermann, Tankred Klaus
(86) Internationale Anmeldenummer: PCT/EP2007/062674
(87) Internationale Veröffentlichungsnummer: WO 2008/062030

(56) Entgegenhaltungen:
- EP-A- 1 046 924
- GB-A- 2 358 977
- US-A- 5 323 322
- US-A- 5 796 365
- US-A- 5 884 220
- US-A- 6 018 818

## Beschreibung

Die Erfindung betrifft den Betrieb eines Satellitennavigationsempfängers, der unter Verwendung von Korrekturdaten eine Ortsbestimmung vornimmt.

Satellitennavigationssysteme sind allgemein bekannt und dienen der Positions- bzw. Ortsbestimmung mithilfe von Satellitensignalen. Durch Bestimmung der Laufzeit der Satellitensignale wird unter Verwendung eines Triangulationsverfahrens die eigene Position bestimmt. Da Fluktuationen in der Ionosphäre und Stratosphäre die Laufzeit der Satellitensignale beeinflussen, kann durch den Einsatz von Signalen terrestrischer Basisstationen die Genauigkeit der Positionsbestimmung erhöht werden. Diese Basisstationen, deren Positionen anderweitig wohl bekannt sind, bestimmen ebenfalls aus den Satellitensignalen ihre eigene Position. Aus den Unterschieden zwischen bestimmter Position und bekannter Position werden Korrekturdaten bestimmt, mit deren Hilfe Satellitennavigationsempfänger ihre Position präziser bestimmen können. Auf dieser Basis arbeiten beispielsweise DGPS- (differential global positioning system) Empfänger.

Da Satellitennavigationssysteme für den mobilen Einsatz konzipiert sind, werden die Korrekturdaten über eine Kommunikationsverbindung empfangen. Reißt die Kommunikationsverbindung ab, so kommt es zu einem Ausfall des Korrekturdatenstroms. Hält der Ausfall hinreichend lange an, so muss das Gerät in einen Betriebsmodus ohne Korrekturdatenauswertung umschalten.

Die EP 1046924 A2 schlägt ein separates Empfangsmodul für einen DGPS-Satellitennavigationsempfänger vor, mit dem DGPS-Korrekturdaten bezogen werden können. Es ist ausgebildet, die Korrekturdaten in Echtzeit über das Internet zu beziehen.

US 5,884,220 beschreibt einen Satellitennavigationsempfänger, der über zwei Kommunikationsverbindungen simultan zwei Korrekturdatenströme empfängt. Die Daten beider Korrekturdatenströme werden kombiniert, um einen einzigen Korrekturdatenstrom hoher Qualität zu erhalten.

Die US 5,323,322 A1 beschreibt ein GPS-Netzwerk, welches eine Mehrzahl von Referenzstationen sowie eine zentrale Verarbeitungseinheit umfasst, über die differenzielle GPS-Korrekturinformationen an eine Mehrzahl von Benutzern versendet werden. Die zentrale Verarbeitungseinheit umfasst eine Mehrzahl von Datenverbindungsanschlüssen, einschließlich zwei Backup-Verbindungen.

Es ist eine Aufgabe einer Ausführungsform der Erfindung, einen zuverlässigeren Betrieb eines Korrekturdaten verwendenden Satellitennavigationsempfängers zu ermöglichen.

Weiterhin ist es eine Aufgabe einer Ausführungsform der Erfindung, einen komfortableren Betrieb eines Korrekturdaten verwendenden Satellitennavigationsempfängers zu ermöglichen, indem dessen technisches Potenzial besser ausgeschöpft wird.

Die Lösung dieser Aufgaben erfolgt mit den Merkmalen der unabhängigen Ansprüche. Vorteilhafte Weiterbildungen und weitere Ausführungsformen ergeben sich mit den Merkmalen der abhängigen Ansprüche.

Ein erster Aspekt der Erfindung betrifft ein Verfahren zur Positionsbestimmung durch einen Satellitennavigationsempfänger. Bei dem Verfahren werden Satellitensignale zur Grobbestimmung der Position und über eine erste Kommunikationsverbindung Korrekturdaten zur Feinbestimmung der Position empfangen. Als Ersatz für die erste Kommunikationsverbindung wird eine zweite Kommunikationsverbindung ausgewählt, wenn
a) die erste Kommunikationsverbindung keine Korrekturdaten liefert, die eine unterbrechungsfreie Feinbestimmung der Position ermöglichen, oder
b) die zweite Kommunikationsverbindung den Einsatz eines Satellitennavigationsempfängers in einem anderen Betriebsmodus ermöglicht. Der Satellitennavigationsempfänger dieser Ausführungsform ist ausgebildet, eine erste Kommunikationsverbindung, nachfolgend aktive Kommunikationsverbindung genannt, zu betreiben, um über diese Korrekturdaten zu empfangen. Weiterhin wird eine zweite Kommunikationsverbindung, nachfolgend passive Kommunikationsverbindung genannt, vom Satellitennavigationsempfänger bereitgestellt. In der ersten Variante dieser Ausführungsform wird für den Fall, dass der Korrekturdatenstrom abreißt, die passive Kommunikationsverbindung zur aktiven Kommunikationsverbindung erklärt. Die Korrekturdaten werden dann über die neue aktive Kommunikationsverbindung bezogen, wodurch ein unterbrechungsfreies Empfangen von Korrekturdaten realisiert wird. Diese Vorgehensweise kann dann gewählt werden, wenn im Stand der Technik mangels Korrekturdaten in einen zweiten Betriebsmodus geschaltet wird, der die Position ohne Korrekturdaten bestimmt. Ein Abreißen des Korrekturdatenstroms kann sich für den Fall, dass es sich bei der Kommunikationsverbindung um eine Funkverbindung handelt, dann ergeben, wenn sich der Satellitennavigationsempfänger in einem Funkschatten befindet. In einem solchen Fall kann ein unterbrechungsfreier Betrieb gewährleistet werden, und zwar insbesondere dann, wenn über die zweite Kommunikationsverbindung bereits eine Verbindung zum Korrekturdatenserver aufgenommen wurde. Handelt es sich bei der Kommunikationsverbindung um eine kabelgebundene Verbindung, z.B. eine Ethernet-Verbindung, so kann auch für den Fall, dass es zu einem Kabelbruch kommt, ein unterbrechungsfreier Betrieb gewährleistet werden
.

Ein unterbrechungsfreier Betrieb wird auch dann gewährleistet, wenn der Satellitennavigationsempfänger den Sendebereich der Korrekturdaten-Sendestation verlässt. Letzteres ergibt sich zum Beispiel dann, wenn Ballungszentren verlassen werden, da die genannten Sendestationen häufig den ländlichen Bereich nicht abdecken und somit nicht flächendeckend Korrekturdaten zur Verfügung stellen können. Insofern erleichtert die genannte Ausführungsform die flächendeckende Versorgung von Satellitennavigationsempfängern mit Korrekturdaten.

In der zweiten Variante dieser Ausführungsform werden Korrekturdaten über die neue aktive Kommunikationsverbindung bezogen, wenn dadurch der Einsatz des Satellitennavigationsempfängers in einem anderen Betriebsmodus möglich wird bzw. wenn dadurch bei dem Satellitennavigationsempfänger ein anderer Betriebsmodus wählbar ist. Beispielsweise erfolgt die Auswahl dann, wenn dadurch der Satellitennavigationsempfänger in einem Betriebsmodus mit höherer Genauigkeit der Positionsbestimmung arbeiten kann. Die Auswahl des anderen Betriebsmodus kann auch durch den Benutzer veranlasst werden.

Aus den obigen Ausführungen ergibt sich, dass es sich bei der ersten und zweiten Kommunikationsverbindung um eine Funk- und/oder Kabelverbindung handelt. Im Regelfall stellt die Kommunikationsverbindung eine Verbindung zu einem Internet-Server her. Die Verbindung ist aktiv, wenn die zugehörige Hardware in Form eines Funk- oder Kabelmodems elektrisch angeschlossen ist, und wenn sie mit dem Internet verbunden ist. Die Verbindung ist passiv, wenn das zugehörige Modem elektrisch angeschlossen ist, wobei es entweder noch nicht mit dem Internet verbunden ist oder zwar mit dem Internet verbunden ist, aber keine Korrekturdaten liefert. Eine zweite Kommunikationsverbindung auswählen bedeutet im ersten Fall, dass man sich mit der zugeordneten Hardware in das Internet einwählt und dann über die zweite Kommunikationsverbindung Korrekturdaten bezieht. Im zweiten Fall wird die Hardware, mit der man sich bereits im Internet angemeldet hat, nun für den Bezug von Korrekturdaten eingesetzt.

Bei der obigen Ausführungsform ist eine Auswahl vorzunehmen, welche Kommunikationsverbindung für den Bezug von Korrekturdaten eingesetzt werden soll. In einer zweiten Ausführungsform erfolgt das Auswählen der zweiten Kommunikationsverbindung durch den Satellitennavigationsempfänger selbst oder durch ein separates Empfangsmodul für die Korrekturdaten. Der Satellitennavigationsempfänger wird die Auswahl im Allgemeinen nur dann selbst vornehmen können, wenn er über mindestens zwei Kommunikationsmodems, d.h. Funk- und/oder Kabelmodems, verfügt, zwischen denen er umschalten kann. Ist dies nicht der Fall, bietet sich der Einsatz eines separaten Empfangsmoduls an, das über mindestens zwei Kommunikationsmodems, d.h. Funk- und/oder Kabelmodems, verfügt, die jeweils Korrekturdaten empfangen können.

In einer dritten Ausführungsform wird die zweite Kommunikationsverbindung ausgewählt, wenn die erste Kommunikationsverbindung für eine vorgegebene Zeitspanne unterbrochen ist. Eine einfache Lösung ergibt sich, wenn die Zeitspanne fest vorgegeben ist. Die Zeitspanne kann jedoch auch mit geringem Rechenaufwand dynamisch bestimmt werden. Für den letztgenannten Fall ist anzumerken, dass Korrekturdaten nur eine zeitlich begrenzte Gültigkeit haben, die von der Genauigkeit abhängt, mit der die Position bestimmt werden soll. Für einen kontinuierlichen Betrieb sollte der Satellitennavigationsempfänger stets gültige Korrekturdaten verwenden. Dies kann gewährleistet werden, wenn spätestens beim Ablauf der Gültigkeit des letzten noch erhaltenen Korrekturdatensatzes die zweite Kommunikationsverbindung ausgewählt wird und dann über sie neue Korrekturdaten bezogen werden.

In einer weiteren Ausführungsform wird die zweite Kommunikationsverbindung ausgewählt, wenn bei der ersten Kommunikationsverbindung die Signalqualität ein vorgegebenes Maß unterschreitet. Bei dieser Ausführungsform wird insofern die Qualität der ersten Kommunikationsverbindung überwacht und vorausschauend eine zweite Kommunikationsverbindung ausgewählt, bevor es überhaupt zu einem Abreißen des Korrekturdatenstroms kommt. Auf diese Weise wird ein kontinuierlicher Empfang von Korrekturdaten und damit ein unterbrechungsfreier Betrieb des Satellitennavigationsempfängers mit hoher Genauigkeit der Positionsbestimmung wahrscheinlicher. Hierbei kann so vorgegangen werden, dass für alle Kommunikationsverbindungen die Signalqualität bestimmt wird und über vorgegebene Kriterien eine Liste erstellt wird. Je nach Position der Kommunikationsverbindung in der Liste ist die Geeignetheit für den jeweiligen Einsatzzweck besonders gut oder weniger gut.

Ferner ist eine Ausführungsform vorgesehen, bei der die zweite Kommunikationsverbindung ausgewählt wird, wenn bei ausreichender Signalqualität der ersten Kommunikationsverbindung die empfangenen Korrekturdaten zur Feinbestimmung der Position unbrauchbar sind. Diese Betriebsweise bietet sich an, wenn der Anbieter wegen technischer Probleme mangelhafte Korrekturdatensätze liefert oder wenn die zunächst unverschlüsselten Korrekturdaten nunmehr verschlüsselt empfangen werden und der Satellitennavigationsempfänger verschlüsselte Korrekturdaten nicht verwerten kann. Weiterhin ist diese Betriebsweise wählbar, wenn sich die Art der Korrekturdatenverschlüsselung ändert, wie es im militärischen Bereich aus Sicherheitsgründen erforderlich sein kann.

Wie oben ausgeführt, kann als Ersatz für die erste Kommunikationsverbindung auch dann eine zweite Kommunikationsverbindung ausgewählt werden, wenn diese den Einsatz eines Satellitennavigationsempfängers in einem anderen Betriebsmodus ermöglicht. Gemäß einer weiteren Ausführungsform der Erfindung kann in diesem Sinne eine Auswahl erfolgen, wenn hierdurch eine Positionsbestimmung mit anderer, z. B. höherer, Genauigkeit, ein Empfang von Satellitensignalen mit anderer Verschlüsselung oder eine Positionsbestimmung auf Basis eines anderen Satellitennavigationssystems erfolgen kann.

Unterschiedliche Anbieter von Korrekturdaten bieten ihre Korrekturdaten zu unterschiedlichen Konditionen und ggf. für unterschiedliche Empfangsgebiete zur Realisierung der jeweiligen Genauigkeit in der Positionsbestimmung an. So ist es möglich, Korrekturdaten über die erste Kommunikationsverbindung von einem Anbieter A zu beziehen und alternativ hierzu andere Korrekturdaten über die zweite Kommunikationsverbindung von einem Anbieter B. Durch die zweite Kommunikationsverbindung können dann beispielsweise vom Anbieter B Korrekturdaten bezogen werden, die eine größere Genauigkeit bei der Positionsbestimmung ermöglichen. Auch ist durch den Anbieterwechsel ein Bezug von Korrekturdaten zu geringeren Kosten denkbar. Auf diese Weise wird insofern insgesamt das technische Potenzial des Satellitenempfängers unter Beachtung der Anforderungen der jeweiligen Applikation sowie unter Beachtung der Kostenlage besser ausgeschöpft.

Ein weiterer Betriebsmodus ist durch das Auswählen der zweiten Kommunikationsverbindung nutzbar, wenn über diese Korrekturdaten mit einer anderen Verschlüsselung beziehbar sind. So kann es vorkommen, dass aufgrund militärischer Erfordernisse Korrekturdaten des Anbieters A vorübergehend nur verschlüsselt ausgestrahlt werden, dass aber weiterhin über die zweite Kommunikationsverbindung unverschlüsselte Daten bezogen werden können. In einem solchen Fall können mithilfe der zweiten Kommunikationsverbindung problemlos die unverschlüsselten Daten empfangen werden.

Ein weiterer nutzbarer Betriebsmodus ergäbe sich, wenn über die zweite Kommunikationsverbindung Korrekturdaten eines anderen Satellitennavigationssystems verfügbar werden und der Satellitennavigationsempfänger nun auf Basis dieses anderen Satellitennavigationssystems arbeiten soll. So könnte beispielsweise der Satellitennavigationsempfänger zunächst in einem ersten Betriebsmodus auf Basis des GPS-Systems arbeiten und dann in einem zweiten Betriebsmodus eine Positionsbestimmung auf Basis des Galileo-Systems vornehmen. In diesem Fall würden zunächst über die erste Kommunikationsverbindung GPS-Korrekturdaten bezogen und anschließend über die zweite Kommunikationsverbindung Galileo-Korrekturdaten. Auch hierdurch wird die flächendeckende Einsetzbarkeit von Satellitennavigationssystemen erleichtert.

Weiterhin ist eine Ausführungsform vorgesehen, bei der für den Fall, dass versucht wird, über eine Kommunikationsverbindung in Kontakt mit dem Satellitennavigationsempfänger zu treten und die hierbei verwendete Kommunikationsverbindung eine solche ist, über die aktuell Korrekturdaten bezogen werden, für den Empfang von Korrekturdaten eine zweite Kommunikationsverbindung ausgewählt wird. Diese Vorgehensweise ermöglicht es beispielsweise, über eine fest vorgegebene Kommunikationsverbindung Daten, zum Beispiel eine neue Firmware, zum Satellitennavigationsempfänger herunterzuladen und gleichzeitig unterbrechungsfrei die eigene Position zu bestimmen. Eine Kommunikation mit dem Satellitennavigationsempfänger zu Service- oder Wartungszwecken führt damit nicht zu dessen Ausfall bei der Positionsbestimmung. Auch hierdurch wird eine unterbrechungsfreie Positionsbestimmung mit hoher Genauigkeit gewährleistet.

Bei einer weiteren Ausführungsform wird während des Empfangs von Korrekturdaten über die erste Kommunikationsverbindung die Signalqualität der zweiten und gegebenenfalls einer weiteren Kommunikationsverbindung überwacht. Dadurch wird gewährleistet, dass für den Fall, dass ein Auswählen der zweiten Kommunikationsverbindung vorgenommen werden soll, diese tatsächlich zuverlässig im Stande ist, die gewünschten Korrekturdaten zu liefern. Besitzt der Satellitennavigationsempfänger mehrere Funk- und/oder Kabelmodems zur Bereitstellung einer Mehrzahl von Kommunikationsverbindungen, so kann auf diese Weise die beste Kommunikationsverbindung ausgewählt werden, die einen zuverlässigen Empfang von Korrekturdaten gewährleistet.

Zur Überwachung der Signalqualität, der ersten, zweiten oder gegebenenfalls mindestens einer weiteren Kommunikationsverbindung kann als Maß für die Signalqualität die Empfangsfeldstärke, die durchschnittliche Datenrate, die maximale Datenrate, die Datenpaketverzögerungen, der Verzögerungs-Jitter, die maximale Verlustrate an Datenpaketen, die Bitfehlerrate und/oder die Frame-Fehlerrate herangezogen werden. Für UMTS-Verbindungen kann beispielsweise auf die allgemein bekannten Dienstgüteparameter zurückgegriffen werden, wie sie im 3GPP-Dokument TS 23.107 V.6.1.0 (dort Abschnitt 6.4.3) spezifiziert sind.

Ausführungsformen des Verfahrens führen eine Positionsbestimmung mit GPS-, GLONASS-, SatCom-, Beidou-, MTSAT- und/oder Galileo-Satellitensignalen durch. Die erste oder zweite Kommunikationsverbindung kann dabei eine GSM-, GPRS-, UMTS-, SatCom-, WLAN-, DECT-, Radio-, LAN-, Internet-, Bluetooth- und/oder ZigBee-Verbindung sein.

Ein zweiter Aspekt der Erfindung betrifft ein Computerprogramm zur Ausführung in einem Computersystem, umfassend Softwarecodeabschnitte zur Durchführung eines Verfahrens zur Positionsbestimmung gemäß einem der oben beschriebenen Ausführungsformen. Das Computerprogramm dient der Ausführung des oben beschriebenen Verfahrens und befindet sich gemäß einem weiteren Aspekt der Erfindung auf einem Datenträger des Satellitennavigationsempfängers, in welchem es mithilfe eines Arbeitsspeichers zur Ausführung gebracht wird. Alternativ befindet sich das Computerprogramm in einem separaten Empfangsmodul, das nachfolgend noch näher erläutert werden wird.

Das Computerprogramm kann auf bekannte Weise verkörpert sein, beispielsweise in Form eines Computerprogrammprodukts. Das Computerprogrammprodukt ist auf einem computerlesbaren Medium, z. B. einer DVD oder einer Festplatte, abgelegt und umfasst computerlesbare Programmmittel, die einen Computer, insbesondere einen Satellitennavigationsempfänger, veranlassen, ein Verfahren zur Positionsbestimmung nach einem der vorherigen Ausführungsformen durchzuführen, wenn das Programm auf einem Computer, insbesondere einem Satellitennavigationsempfänger, abläuft.

Eine andere Möglichkeit der Verkörperung des Computerprogramms besteht darin, ein elektromagnetisches Signal oder eine elektromagnetische Signalfolge als Träger binärer beziehungsweise digitaler Daten vorzusehen, die das Computerprogramm repräsentieren. Das Computerprogramm kann dann mithilfe des Signals kabelgebunden oder per Funk übertragen werden, beispielsweise über Computernetzwerke wie das Internet.

Ein weiterer Aspekt der Erfindung betrifft ein Empfangsmodul für Korrekturdaten eines Satellitennavigationsempfängers. Dieses umfasst einen Mikroprozessor und mindestens zwei Kommunikationsmodems, d.h. Funk- und/oder Kabelmodems, wobei der Mikroprozessor ausgebildet ist, dasjenige Kommunikationsmodem, nachfolgend aktives Kommunikationsmodem genannt, auszuwählen, das Korrekturdaten empfängt und über eine externe Schnittstelle weiterleitet. Für den Fall, dass vom aktiven Kommunikationsmodem keine Korrekturdaten empfangen werden, die eine unterbrechungsfreie Feinbestimmung der Position durch einen Satellitennavigationsempfänger ermöglichen, oder für den Fall, dass die zweite Kommunikationsverbindung den Einsatz eines Satellitennavigationsempfängers in einem anderen Betriebsmodus ermöglicht, wählt der Mikroprozessor das zweite Kommunikationsmodem als aktives Kommunikationsmodem aus.

Das Kommunikationsmodem, das vom Empfangsmodul für die Bereitstellung einer ersten oder zweiten Kommunikationsverbindung benutzt wird, kann ein GSM-, GPRS, UMTS-, WLAN-, DECT-, Radio-, SatCom-, ZigBee-, LAN-, Internet- Ethernet- und/oder Bluetooth-Modem sein. Der Satellitenempfänger selbst kann ein GLONASS-, GPS-, SatCom-, Beidou- bzw. Compass, MTSAT- und/oder Galileo-Satellitennavigations-empfänger sein. Hierbei soll hervorgehoben werden, dass es selbstverständlich möglich ist, dass das Empfangsmodul eine Positionsbestimmung auf Basis von zwei oder mehreren Satellitennavigationssystemen durchzuführen im Stande ist. Auch können zwei Kommunikationsmodems der gleichen Art gewählt werden, z. B. zwei GSM-Modems. In Deutschland können in diesem Fall zum Beispiel Korrekturdaten über das D1-Netz und bedarfsweise über das D2-Netz bezogen werden. Da diese Netze das Bundesgebiet unterschiedlich abdecken, wird auf diese Weise durch zwei GSM-Modems die flächendeckende Versorgung eines Satellitenempfängers mit Korrekturdaten verbessert.

Das Empfangsmodul ist eine separate Einheit, die Korrekturdaten empfängt und sie über die externe Schnittstelle dem Satellitennavigationsempfänger zur Verfügung stellt. Hierbei kann es vorkommen, dass die Korrekturdaten, wie oben beschrieben, zur Feinbestimmung der Position unbrauchbar sind. Da dies vom Algorithmus des Satellitennavigationsempfängers festgestellt wird, ist das Empfangsmodul in einer weiteren Ausführungsform ausgebildet, ein Auswahlaufforderungssignal zu empfangen und nach dessen Empfang eine zweite Kommunikationsverbindung auszuwählen. Stellt insofern der Satellitennavigationsempfänger fest, dass die Korrekturdaten unbrauchbar sind, so gibt er ein Auswahlaufforderungssignal aus, z.B. über die oben genannte Schnittstelle, welches vom Empfangsmodul empfangen werden kann. Dadurch triggert der Satellitennavigationsempfänger die Vornahme einer Auswahl durch das Empfangsmodul. Die Auswahl selbst wird vom Empfangsmodul vorgenommen. Diese Ausführungsform kann eingesetzt werden, wenn das Empfangsmodul nicht im Stande ist, die fehlende Geeignetheit der empfangenen Korrekturdaten bei befriedigender Signalqualität festzustellen.

Gemäß einem weiteren Aspekt der Erfindung wird ein Satellitennavigationsempfänger vorgeschlagen, der um eine Ausführungsform des oben beschriebenen Empfangsmoduls ergänzt ist. Empfangsmodul und Satellitennavigationsempfänger sind in diesem Fall über die oben genannte Schnittstelle verbunden. Dies ermöglicht es, vorhandene Satellitennavigationsempfänger nachzurüsten, um die erweiterte Funktionalität bereitzustellen.

Gemäß einer Ausführungsform des Satellitennavigationsempfängers ist dieser ausgebildet, für den Fall, dass empfangene Korrekturdaten keine unterbrechungsfreie Feinbestimmung der Position ermöglichen, ein Auswahlaufforderungssignal zu senden. Das Auswahlaufforderungssignal kann ebenfalls über die oben genannte Schnittstelle oder eine weitere Schnittstelle, beispielsweise eine serielle Schnittstelle, übertragen werden.

Weitere Merkmale und Vorteile der beanspruchten Erfindung werden aus der folgenden detaillierten Beschreibung mit Bezug auf die beigefügte Zeichnung erkennbar, die nachfolgend als nicht beschränkendes Beispiel angegeben ist. Hierbei soll die Benutzung von Bezugszeichen in der Figur nicht dahingehend verstanden werden, dass die Bezugszeichen den Schutzumfang der beanspruchten Erfindung einschränken sollen.

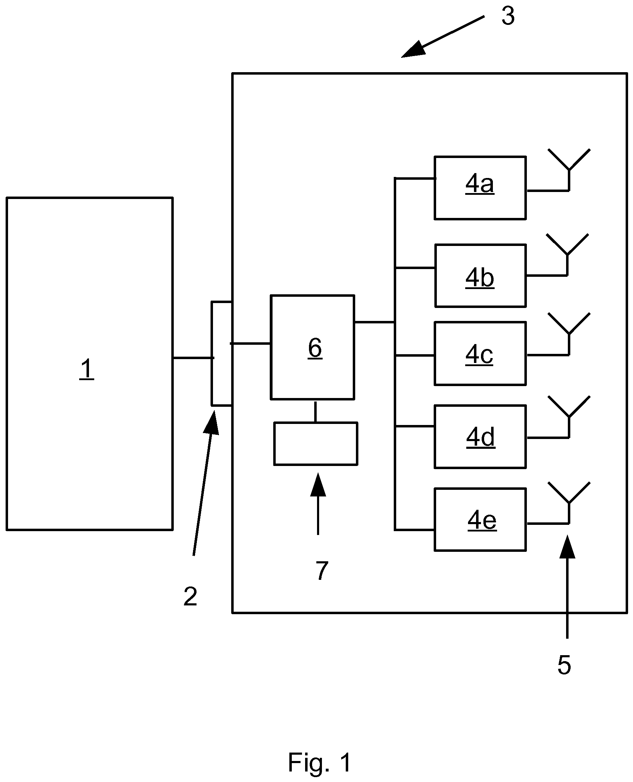

Die einzige Figur 1 zeigt einen Satellitennavigationsempfänger 1, der über eine Schnittstelle 2 mit einem Empfangsmodul 3 verbunden ist. Der Satellitennavigationsempfänger ist ausgebildet, die eigene Position mittels DGPS zu bestimmen. Das Empfangsmodul 3 besitzt ein erstes GSM-Modem 4a, ein zweites GSM-Modem 4b, ein UMTS-Modem 4c, ein WLAN-Modem 4d und ein SatCom-Modem 4e. Jedes Kommunikationsmodem 4a-4e verfügt über eine zugeordnete Antenne 5, um Korrekturdaten vom deutschen Satellitenpositionierungsdienst SAPOS oder von ASCOS oder andere zu empfangen.

Im Betrieb des Empfangsmoduls 3 empfängt dieses vom Satellitenpositionierungsdienst SAPOS Korrekturdaten über das erste GSM-Modem 4a. Dieses empfängt die Korrekturdaten über das D1-Netz. Die Korrekturdaten werden vom Mikroprozessor 6, die das erste GSM-Modem 4a als aktives Kommunikationsmodem ausgewählt hat, dem Satellitennavigationsempfänger 1 über die Schnittstelle 2 zugeführt. Gleichzeitig wird vom Mikroprozessor 6 die Signalqualität der weiteren Kommunikationsverbindungen der Kommunikationsmodems 4b-4e überwacht. Verlässt der Benutzer des Systems aus Satellitennavigationsempfänger 1 und Empfangsmodul 3 den Sendebereich des D1-Netzes, so kann das erste GSM-Modem 4a keine Korrekturdaten mehr liefern. Bricht die Kommunikationsverbindung des GSM-Modems 4a nun ab, so wählt der Mikroprozessor 6 ein anderes Kommunikationsmodem 4b-4e als neues aktives Kommunikationsmodem aus. Dies kann z. B. das zweite GSM-Modem 4b sein, das im Stande ist, über das D2-Netz Korrekturdaten zu beziehen. Um ein schnelles Umschalten vom ersten GSM-Modem 4a zum zweiten GSM-Modem 4b zu ermöglichen, hatte dieses bereits vorher die Verbindung zum Korrekturdaten-Server von SAPOS aufgenommen. Daraus ergibt sich, dass das Empfangsmodul 3 einem Betrieb des Satellitennavigationsempfängers 1 unter Verwendung von Korrekturdaten ermöglicht, auch wenn das D1-Signal nicht mehr zur Verfügung steht. Damit kann ein flächendeckendes und unterbrechungsfreies Arbeiten mit hoher Positionsgenauigkeit gewährleistet werden.

Die Auswahl des konkreten Kommunikationsmodems 4a-4e für die Bereitstellung von Korrekturdaten für den Satellitennavigationsempfänger 1 erfolgt durch den Mikroprozessor 6. Diese arbeitet ein Computerprogramm ab, welches im Arbeitsspeicher 7 residiert. Stellt jedoch der Satellitennavigationsempfänger 1 fest, dass die gelieferten Korrekturdaten unbrauchbar sind, z.B. weil sie verschlüsselt sind, es gibt er ein Auswahlaufforderungssignal über die Schnittstelle 2 an den Mikroprozessor 6 ab, um diesen zu veranlassen, ein neues aktives Kommunikationsmodem auszuwählen.

Obwohl vorstehend eine konkrete Ausführungsform beschrieben wurde, wird der Fachmann erkennen, dass die Beschreibung dieser Ausführungsform nicht zum Zweck hat, die Erfindung in der angegebenen Form zu beschränken. Die Erfindung soll vielmehr alle Modifikationen, Äquivalente und Alternativen umfassen, die in den Schutzumfang der beanspruchten Erfindung fallen.

## Patentansprüche

1. Verfahren zur Positionsbestimmung durch einen mobilen Satellitennavigationsempfänger (1), bei dem Satellitensignale zur Grobbestimmung der Position und über eine erste Kommunikationsverbindung Korrekturdaten zur Feinbestimmung der Position empfangen werden, und bei dem als Ersatz für die erste Kommunikationsverbindung eine zweite Kommunikationsverbindung ausgewählt wird, wenn
a) die erste Kommunikationsverbindung keine Korrekturdaten liefert, die eine unterbrechungsfreie Feinbestimmung der Position ermöglichen, oder
b) die zweite Kommunikationsverbindung den Einsatz eines Satellitennavigationsempfängers in einem anderen Betriebsmodus ermöglicht,
wobei die zweite Kommunikationsverbindung ausgewählt wird, wenn diese den Einsatz eines Satellitennavigationsempfängers in einem anderen Betriebsmodus ermöglicht, bei dem eine Positionsbestimmung mit anderer Genauigkeit, ein Empfang von Satellitensignalen mit anderer Verschlüsselung oder eine Positionsbestimmung auf Basis eines anderen Satellitennavigationssystems erfolgt.

2. Verfahren nach Anspruch 1, bei dem das Auswählen der zweiten Kommunikationsverbindung durch den Satellitennavigationsempfänger selbst oder durch ein separates Empfangsmodul (3) für die Korrekturdaten erfolgt.

3. Verfahren nach einem der vorherigen Ansprüche, bei dem die zweite Kommunikationsverbindung ausgewählt wird, wenn die erste Kommunikationsverbindung für eine vorgegebene Zeitspanne unterbrochen ist.

4. Verfahren nach einem der vorherigen Ansprüche, bei dem die zweite Kommunikationsverbindung ausgewählt wird, wenn bei der ersten Kommunikationsverbindung die Signalqualität ein vorgegebenes Maß unterschreitet.

5. Verfahren nach einem der vorherigen Ansprüche, bei dem die zweite Kommunikationsverbindung ausgewählt wird, wenn bei ausreichender Signalqualität der ersten Kommunikationsverbindung die empfangenen Korrekturdaten zur Feinbestimmung der Position unbrauchbar sind.

6. Verfahren nach einem der vorherigen Ansprüche, bei dem für den Fall, dass versucht wird, über eine Kommunikationsverbindung in Kontakt mit dem Satellitennavigationsempfänger zu treten und die hierbei verwendete Kommunikationsverbindung eine solche ist, über die aktuell Korrekturdaten bezogen werden, für den Empfang von Korrekturdaten eine zweite Kommunikationsverbindung ausgewählt wird.

7. Verfahren nach einem der vorherigen Ansprüche, bei dem während des Empfangs von Korrekturdaten über die erste Kommunikationsverbindung die Signalqualität der zweiten und gegebenenfalls einer weiteren Kommunikationsverbindung überwacht wird.

8. Verfahren nach einem der vorherigen Ansprüche, bei dem als Maß für die Signalqualität die Empfangsfeldstärke, die durchschnittliche Datenrate, die maximale Datenrate, die Datenpaketverzögerungen, der Verzögerungs-Jitter, die maximale Verlustrate an Datenpaketen, die Bitfehlerrate und/oder die Frame-Fehlerrate herangezogen werden.

9. Verfahren nach einem der vorherigen Ansprüche, bei dem GPS-, GLONASS-, SatCom-, Beidou-, MTSAT-, und/oder Galileo-Satellitensignale empfangen werden.

10. Verfahren nach einem der vorherigen Ansprüche, bei dem die erste oder zweite Kommunikationsverbindung eine GSM-, GPRS-, UMTS-, WLAN-, DECT-, Radio-, LAN-, Internet-, SatCom-, Bluetooth und/oder ZigBee-Verbindung ist.

11. Computerprogramm zur Ausführung in einem Computersystem, umfassend Softwarecodeabschnitte zur Durchführung eines Verfahrens gemäß einem der vorherigen Verfahrensansprüche.

12. Computerprogrammprodukt, abgelegt auf einem computerlesbaren Medium und computerlesbare Programmmittel umfassend, die einen Computer veranlassen, ein Verfahren nach einem der vorherigen Verfahrensansprüche durchzuführen, wenn das Programm auf einem Computer, insbesondere einem Satellitennavigationsempfänger, abläuft.

13. Empfangsmodul für Korrekturdaten eines mobilen Satellitennavigationsempfängers (1), umfassend einen Mikroprozessor (6) und mindestens zwei Kommunikationsmodems (4a-4e), wobei der Mikroprozessor ausgebildet ist, dasjenige Kommunikationsmodem auszuwählen, das Korrekturdaten empfängt und über eine externe Schnittstelle (2) weiterleitet und das für den Fall, dass
a) vom aktiven Kommunikationsmodem keine Korrekturdaten empfangen werden, die eine unterbrechungsfreie Feinbestimmung der Position durch einen Satellitennavigationsempfänger ermöglichen, oder
b) die zweite Kommunikationsverbindung den Einsatz eines Satellitennavigationsempfängers in einem anderen Betriebsmodus ermöglicht, das zweite Kommunikationsmodem als aktives Kommunikationsmodem auswählt,
wobei die zweite Kommunikationsverbindung ausgewählt wird, wenn diese den Einsatz eines Satellitennavigationsempfängers in einem anderen Betriebsmodus ermöglicht, bei dem eine Positionsbestimmung mit anderer Genauigkeit, ein Empfang von Satellitensignalen mit anderer Verschlüsselung oder eine Positionsbestimmung auf Basis eines anderen Satellitennavigationssystems erfolgt.

14. Empfangsmodul nach Anspruch 13, bei dem als Kommunikationsmodem ein Ethernet-Modem, ein GSM-, GPRS-, Radio-, SatCom-, UMTS-, WLAN-, DECT-, ZigBee-, LAN-, Internet-, und/oder Bluetooth-Modem vorgesehen ist.

15. Empfangsmodul nach Anspruch 13 oder 14, für GLONASS-, GPS-, SatCom-, Beidou-, MTSAT und/oder Galileo-Satellitennavigationsempfänger .

16. Empfangsmodul nach einem der Ansprüche 13 bis 15, ausgebildet zum Empfang eines Auswahlaufforderungssignals und zum Auswählen einer zweiten Kommunikationsverbindung nach dessen Empfang.

17. Satellitennavigationsempfänger (1) mit einem Empfangsmodul (3) nach einem der Ansprüche 13 bis 16.

18. Satellitennavigationsempfänger nach Anspruch 17, ausgebildet zum Senden eines Auswahlaufforderungssignals für den Fall, dass empfangene Korrekturdaten keine unterbrechungsfreie Feinbestimmung der Position ermöglichen.

## Claims

1. Method for position determination by a mobile satellite navigation receiver (1), wherein satellite signals for a rough determination of the position and, via a first communication connection, correction data for a fine determination of the position are received, and wherein a second communication connection is selected as substitute for the first communication connection when
a) the first communication connection provides no correction data that enables interruption-free fine determination of the position, or
b) the second communication connection enables the use of a satellite navigation receiver in a different operation mode,
wherein the second communication connection is selected when the same enables the use of a satellite navigation receiver in a different operation mode, in which position determination with a different accuracy, reception of satellite signals with a different encryption or position determination on the basis of a different satellite navigation system is carried out.

2. Method according to claim 1, wherein selecting the second communication connection is carried out by the satellite navigation receiver itself or by a separate reception module (3) for the correction data.

3. Method according to any of the preceding claims, wherein the second communication connection is selected when the first communication connection is interrupted for a predetermined period of time.

4. Method according to any of the preceding claims, wherein the second communication connection is selected when the signal equality of the first communication consnection falls below a predetermined measure.

5. Method according to any of the preceding claims, wherein the second communication connection is selected when, at a sufficient signal quality of the first communication connection, the received correction data for a fine determination of the position is unusable.

6. Method according to any of the preceding claims, wherein, in case of trying to establish contact with the satellite navigation receiver via a communication connection and the communication connection being used for this is one via which correction data is currently being obtained, a second communication connection is selected for the reception of correction data.

7. Method according to any of the preceding claims, wherein, during the reception of the correction data via the first communication connection, the signal quality of the second and, possibly, an additional communication connection is monitored.

8. Method according to any of the preceding claims, wherein the received field strength, the average data rate, the maximum data rate, the data packet delays, the delay jitter, the maximum loss rate of data packets, the bit error rate and/or the frame error rate are used as measure of the signal quality.

9. Method according to any of the preceding claims, wherein GPS, GLONASS, SatCom, Beidou, MTSAT and/or Galileo satellite signals are received.

10. Method according to any of the preceding claims, wherein the first or second communication connection is a GSM, GPRS, UMTS, WLAN, DECT, radio, LAN, Internet, SatCom, Bluetooth and/or ZigBee connection.

11. Computer program for running on a computer system, including software code portions for performing a method according to any of the preceding method claims.

12. Computer program product, stored on a computer readable medium and including computer readable program means prompting a computer to perform a method according to any of the preceding method claims when the program runs on a computer, in particular on a satellite navigation receiver.

13. Reception module for correction data of a mobile satellite navigation receiver (1), including a microprocessor (6) and at least two communication modems (4a-4e), wherein the microprocessor is configured to select the communication modem that receives correction data and forwards the same via an external interface (2) and that, in the case that
a) the active communication modem receives no correction data that enable a interruption-free fine determination of the position by a satellite navigation receiver, or
b) the second communication connection enables the use of a satellite navigation receiver in a different operation mode, selects the second communication modem as active communication modem,
wherein the second communication connection is selected when the same enables the use of a satellite navigation receiver in a different operation mode, in which position determination with a different accuracy, reception of satellite signals with a different encryption or position determination on the basis of a different satellite navigation system is carried out.

14. Reception module according to claim 13, wherein an Ethernet modem, a GSM, GPRS, radio, SatCom, UMTS, WLAN, DECT, ZigBee, LAN, Internet and/or Bluetooth modem is provided as communication modem.

15. Reception module according to claim 13 or 14 for GLONASS, GPS, SatCom, Beidou, MTSAT and/or Galileo satellite navigation receivers.

16. Reception module according to any one of claims 13 to 15, configured for reception of a selection request signal and for selecting a second communication connection upon reception of the same.

17. Satellite navigation receiver (1) with a reception module (3) according to any one of claims 13 to 16.

18. Satellite navigation receiver according to claim 17, configured for sending a selection request signal in the case that received correction data does not enable interruption-free fine determination of the position.

## Revendications

1. Procédé de détermination de position par un récepteur mobile de navigation par satellite (1), dans lequel sont reçus des signaux de satellite pour la détermination grossière de la position et, par une première connexion de communication, des données de correction pour la définition fine de la position, et dans lequel est sélectionnée, comme remplacement de la première connexion de communication, une deuxième connexion de communication, lorsque
a) la première connexion de communication ne fournit pas de données de correction qui permettent une détermination fine sans interruption de la position, ou
b) la deuxième connexion de communication permet l'utilisation d'un récepteur de navigation par satellite dans un autre mode de fonctionnement,
dans lequel la deuxième connexion de communication est sélectionnée lorsque celle-ci permet l'utilisation d'un récepteur de navigation par satellite dans un autre mode de fonctionnement dans lequel a lieu une détermination de position avec une autre précision, une réception de signaux de satellite avec un autre cryptage ou une détermination de position sur base d'un autre système de navigation par satellite.

2. Procédé selon la revendication 1, dans lequel la sélection de la deuxième connexion de communication a lieu par le récepteur de navigation par satellite lui-même ou par un module de réception (3) séparé pour les données de correction.

3. Procédé selon l'une des revendications précédentes, dans lequel la deuxième connexion de communication est sélectionnée lorsque la première connexion de communication est interrompue pendant un laps de temps prédéterminé.

4. Procédé selon l'une des revendications précédentes, dans lequel la deuxième connexion de communication est sélectionnée lorsque la qualité de signal tombe, dans la première connexion de communication, au-dessous d'une mesure prédéterminée.

5. Procédé selon l'une des revendications précédentes, dans lequel la deuxième connexion de communication est sélectionnée lorsque, en cas de qualité de signal suffisante de la première connexion de communication, les données de correction reçues sont inutilisables pour la détermination fine de la position.

6. Procédé selon l'une des revendications précédentes, dans lequel, au cas où il est essayé d'entrer, par une connexion de communication, en contact avec le récepteur de navigation par satellite et que la connexion de communication utilisée dans ce cas en est une par laquelle sont actuellement obtenues des données de correction, il est sélectionné, pour la réception des données de correction, une deuxième connexion de communication.

7. Procédé selon l'une des revendications précédentes, dans lequel est surveillée, pendant la réception de données de correction par la première connexion de communication, la qualité de signal de la deuxième et éventuellement d'une autre connexion de communication.

8. Procédé selon l'une des revendications précédentes, dans lequel sont utilisés, comme mesure de la qualité de signal, l'intensité de champ de réception, le débit de données moyen, le débit de données maximum, les retards de paquets de données, la fluctuation de retard, le taux maximum de perte de paquets de données, le taux d'erreur binaire et/ ou le taux d'erreur de trame.

9. Procédé selon l'une des revendications précédentes, dans lequel. sont reçus des signaux de GPS, de GLONASS, de SatCom, de Beidou, de MTSAT, et/ou de satellite Galileo.

10. Procédé selon l'une des revendications précédentes, dans lequel la première ou la deuxième connexion de communication est une connexion par GSM, GPRS, UT8, VLAN, DECT, Radio, LAN, Internet, SatCom, Bluetooth et/ou ZigBee.

11. Programme d'ordinateur destiné à être exécuté dans un système informatique comprenant des segments de code de logiciel pour réaliser un procédé selon l'une des revendications de procédé précédentes.

12. Produit de programme informatique mémorisé sur un support lisible par ordinateur et comprenant un moyen de programme lisible par ordinateur pour amener un ordinateur à réaliser un procédé selon l'une des revendications de procédé précédentes lorsque le programme est exécuté sur un ordinateur, en particulier un récepteur de navigation par satellite.

13. Module de réception de données de correction d'un récepteur mobile de navigation par satellite (1) comprenant un microprocesseur (S) et au moins deux modems de communication (4a à 4e), dans lequel le microprocesseur est réalisé pour sélectionner le modem de communication qui reçoit les données de correction et les transmet par l'intermédiaire d'une interface externe (2), et ce au cas où
a) il n'est pas reçu, du modem de communication actif, de données de correction qui permettent une détermination fine sans interruption de la position par un récepteur de navigation par satellite, ou
b) la deuxième connexion de communication permet l'utilisation d'un récepteur de navigation par satellite dans un autre mode de fonctionnement, le deuxième modem de communication est sélectionné comme modem de communication actif,
dans lequel la deuxième connexion de communication est sélectionnée lorsque celle-ci permet l'utilisation d'un récepteur de navigation par satellite dans un autre mode de fonctionnement dans lequel a lieu une détermination de position avec une autre précision, une réception de signaux de satellite avec un autre cryptage ou une détermination de position sur base d'un autre système de navigation par satellite.

14. Module de réception selon la revendication 13, dans lequel est prévu, comme modem de communication, un modem Ethernet, GSM, GPRS, radio, SatCom, UMTS, WLAN, DECT, ZigBee, LAN, Internet, et/ou Bluetooth.

15. Module de réception selon la revendication 13 ou 14 pour récepteur de navigation par satellite GLONASS, GPS, SatCom, Beidou, MTSAT et/ou Galileo.

16. Module de réception selon l'une des revendications 13 à 15, conçu pour recevoir un signal de demande de sélection et pour sélectionner une deuxième connexion de communication après sa réception.

17. Récepteur de navigation par satellite (1) avec un module de réception (3) selon l'une des revendications 13 à 16.

18. Récepteur de navigation par satellite selon la revendication 17, conçu pour envoyer un signal de demande de sélection pour le cas où les données de correction reçues ne permettent pas de détermination fine sans interruption de la position.
